# EUROPEAN PATENT APPLICATION

(11) **EP 4 794 298 A1**
(43) Date of publication of application: **19.08.2026**
(21) Application number: 25190680.6
(22) Date of filing: 21.07.2025
(51) Int. Cl.: H04L 61/5007, H04L 61/5092

(54) **NETWORK COMMUNICATION METHOD**

(30) Priority: 17.02.2025 CN 202510171583
(71) Applicant: Getac Technology Corporation, New Taipei City 221009 (TW)
(72) Inventor: CHENG, Li-Wei, 11568 Taipei City (TW)
(74) Representative: Viering, Jentschura & Partner mbB Patent- und Rechtsanwälte

(57) **Abstract**

The network communication method is used for a console to communicate with a plurality of devices. The plurality of devices have a first network communication protocol address. The network communication method includes sending a first request according to the first network communication protocol address; receiving a first reply message replied by each of the plurality of devices in response to the first request, wherein the first reply message of each of the plurality of devices includes a second network communication protocol address of each of the plurality of devices; and communicating with each of the plurality of devices according to the second network communication protocol address of each of the plurality of devices.

## Description

### RELATED APPLICATIONS

### BACKGROUND

### Field of Disclosure

The present disclosure relates to a communication method, and more particularly to a network communication method.

### Description of Related Art

Traditionally, when a console wants to communicate with a plurality of identical devices on a network, it is unable to directly communicate with a specific device because the Internet Protocol version 4 (IPv4) addresses of these identical devices are the same. Therefore, a dynamic IP address must be assigned to each device through a Dynamic Host Configuration Protocol (DHCP) server so that these identical devices have different IPv4 addresses. Accordingly, the console may communicate with a specific device. However, the above communication method requires an additional DHCP server to assign a dynamic IP address to each device before communication, which is not convenient in use.

Therefore, there is a need for a communication method without first assigning a dynamic IP address to each device using a DHCP server.

### SUMMARY

The foregoing presents a simplified summary of the disclosure in order to provide a basic understanding to the reader. This summary is not an extensive overview of the disclosure and it does not identify key/critical elements of the present disclosure or delineate the scope of the present disclosure.

One embodiment of the present disclosure is to provide a network communication method. The network communication method is used for a console to communicate with a plurality of devices. The plurality of devices have a first network communication protocol address. The network communication method includes sending a first request according to the first network communication protocol address to the plurality of devices; receiving first reply messages replied by the plurality of devices in response to the first request, wherein the first reply message of each of the plurality of devices includes a second network communication protocol address of the each of the plurality of devices; and communicating with the each of the plurality of devices according to the second network communication protocol address of the each of the plurality of devices.

In some embodiments, communicating with the each of the plurality of devices according to the second network communication protocol address of the each of the plurality of devices further includes sending a second request to the each of the plurality of devices according to the second network communication protocol address of the each of the plurality of devices; receiving second reply messages replied by the plurality of devices in response to the second request, wherein the second reply message replied by the each of the plurality of devices include the changed first network communication protocol address of the each of the plurality of devices, wherein the changed first network communication protocol address of the each of the plurality of devices is different from each other; and using the changed first network communication protocol address of the each of the plurality of devices to communicate with the each of the plurality of devices.

In some embodiments, the second request is a request to change the first network communication protocol address, and the each of the plurality of devices further changes the first network communication protocol address in response to the second request.

**In** some embodiments, the first network communication protocol address is an Internet Communication Protocol version 4 address.

In some embodiments, the second network communication protocol address is an Internet Communication Protocol version 6 address.

In some embodiments, the first request is a Simple Service Discovery Protocol (SSDP) device M-Search request.

Another embodiment of the present disclosure is to provide a network communication method. The network communication method is used for a console to communicate with a plurality of devices. The plurality of devices have a first network communication protocol address. The network communication method includes receiving a first request sent by the console according to the first network communication protocol address; generating a first reply message to send to the console in response to the first request, wherein the first reply messages generated by each of the plurality of devices includes second network communication protocol address of the each of the plurality of devices; and receiving a communication request initiated by the console according to the second network communication protocol address of the each of the plurality of devices.

In some embodiments, receiving the communication request initiated by the console according to the second network communication protocol address of the each of the plurality of devices further comprises receiving a second request sent by the console according to the second network communication protocol address of the each of the plurality of devices; generating a second reply message to send to the console in response to the second request, wherein the second reply message generated by the each of the plurality of devices include the changed first network communication protocol address of the each of the plurality of devices, wherein the changed first network communication protocol address of the each of the plurality of devices is different from each other; and receiving the communication request initiated by the console according to the changed first network communication protocol address of the each of the plurality of devices.

In some embodiments, the second request is a request to change the first network communication protocol address, and the each of the plurality of devices further changes the first network communication protocol address in response to the second request.

In some embodiments, the first network communication protocol address is an Internet Communication Protocol version 4 address.

In some embodiments, the second network communication protocol address is an Internet Communication Protocol version 6 address.

**In** some embodiments, the first request is a Simple Service Discovery Protocol (SSDP) device M-Search request.

Another embodiment of the present disclosure is to provide a network communication method for communication between a console and a plurality of devices. The plurality of devices have a first network communication protocol address. The network communication method comprises sending, by the console, a first request to the plurality of devices according to the first network communication protocol address; receiving, by the plurality of devices, the first request to generate a plurality of first reply messages in response to the first request to reply to the console, wherein the first reply message generated by each of the plurality of devices includes a second network communication protocol address of the each of the plurality of devices; receiving, by the console, the first reply messages replied by the plurality of devices; sending, by the console, a second request to the each of the plurality of devices according to the second network communication protocol address of the each of the plurality of devices; receiving, by the plurality of devices, the second request to generate a plurality of second reply messages in response to the second request to reply to the console, wherein the second reply message of the each of the plurality of devices include a changed first network communication protocol address of the each of the plurality of devices, wherein the changed first network communication protocol addresses of the plurality of devices are different from each other; and initiating a communication request, by the console, to communicate with the each of the plurality of devices according to the changed first network communication protocol address of the each of the plurality of devices.

In some embodiments, the second request is a request to change the first network communication protocol address, and the each of the plurality of devices further changes the first network communication protocol address in response to the second request.

In some embodiments, the first network communication protocol address is an Internet Communication Protocol version 4 address.

In some embodiments, the second network communication protocol address is an Internet Communication Protocol version 6 address.

In some embodiments, the first request is a Simple Service Discovery Protocol (SSDP) device M-Search request.

This application utilizes the network devices have different Internet Protocol version 6 (IPV6) addresses to each other. A request is sent on the network by a console to require these network devices to return their IPV6 addresses. Then, the console may use respective IPV6 addresses to communicate with these network devices to require these network devices to change IPv4 address to make theses network devices have different IPv4 addresses. Because it is not necessary to use an additional DHCP server to pre-assign dynamic network addresses to the network devices, it can significantly reduce the workload of technicians to set up the network environment.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of a network environment according to an embodiment of the present disclosure.
FIG. 2A is a flow chart of a network communication method according to an embodiment of the present disclosure.
FIG. 2B is a flow chart of a method for changing a network address according to an embodiment of the present disclosure.
FIG. 3A is a flow chart of a network communication method according to another embodiment of the present disclosure
FIG. 3B is a flow chart of a method for changing a network address according to another embodiment of the present disclosure.

### DESCRIPTION OF THE EMBODIMENTS

To make the contents of the present disclosure more thorough and complete, the following illustrative description is given with regard to the implementation aspects and embodiments of the present disclosure, which is not intended to limit the scope of the present disclosure. The features of the embodiments and the steps of the method and their sequences that constitute and implement the embodiments are described. However, other embodiments may be used to achieve the same or equivalent functions and step sequences.

Unless otherwise defined herein, scientific and technical terminologies employed in the present disclosure shall have the meanings that are commonly understood and used by one of ordinary skill in the art. Unless otherwise required by context, it will be understood that singular terms shall include plural forms of the same and plural terms shall include the singular. Specifically, as used herein and in the claims, the singular forms "a" and "an" include the plural reference unless the context clearly indicates otherwise.

Traditionally, when a console wants to communicate with a plurality of identical devices on a network, it is necessary to use a DHCP server to assign dynamic network addresses to these devices to make these devices have different network communication protocol addresses. Then, the console can communicate with the specific device. Accordingly, it needs extra time for technicians to set up the network environment to install the DHCP server, which is inconvenient for the technicians. Therefore, this application utilizes the network devices have different Internet Protocol version 6 (IPV6) addresses to each other. A request is sent on the network by a console to require these network devices to return their Internet Protocol version 6 addresses. Then, the console may use the Internet Protocol version 6 addresses to communicate with each of these network devices. Because it is not necessary to use an additional DHCP server to pre-assign dynamic network addresses to the network devices in the present disclosure, it can significantly reduce the workload of technicians to set up the network environment to install the DHCP server.

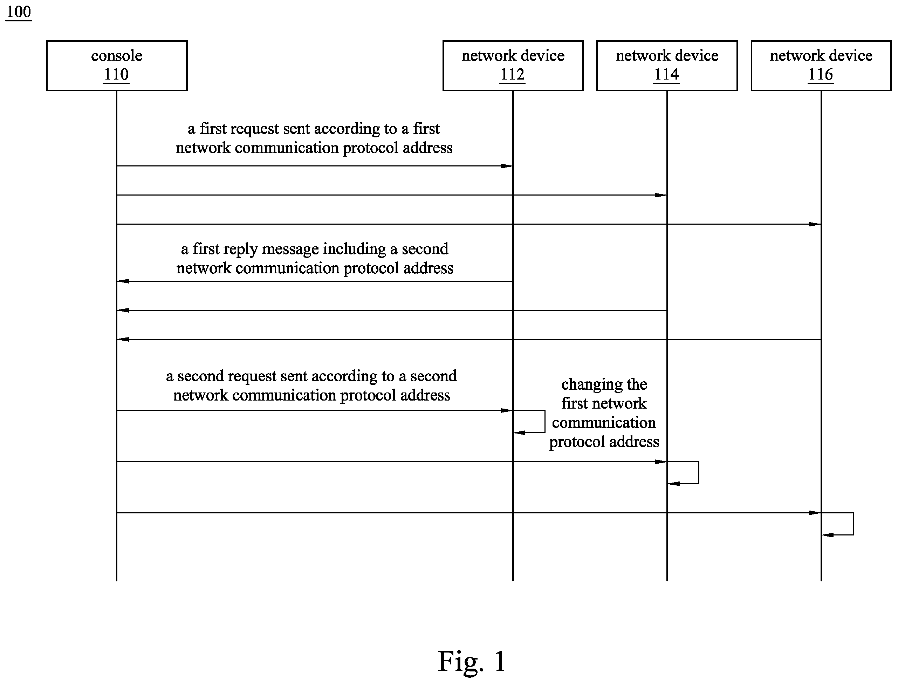

FIG. 1 is a schematic diagram of a network environment according to a preferred embodiment of the present disclosure. In some embodiments, the network environment 100 includes a console 110 and a plurality of identical network devices 112, 114, and 116. The network devices 112, 114, and 116 are the same device and have the same network communication protocol address, such as the first network communication protocol address. **The** console 110 is used to configure the network devices 112, 114, and 116. **In** some embodiments, the console 110 is, for example, a server. **The** network devices 112, 114, and 116 are, for example, mobile devices that can connect to the Internet. **The** console 110 can set parameters of the network devices 112, 114, and 116 through the network to make the network devices 112, 114, and 116 conform to the use environment. It should be noted that in this embodiment, three network devices are used as an example to illustrate the application of this present application. However, the network communication method of this present application is not limited to communicate with three network devices.

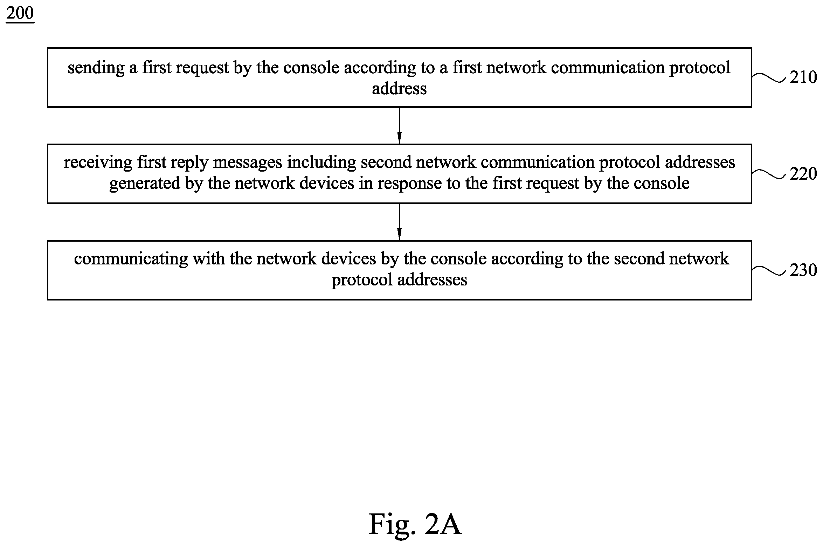

FIG. 2A is a flow chart of a network communication method according to an embodiment of the present disclosure. Because the network devices 112, 114, and 116 are the same network device and have the same first network communication protocol address, the console 110 cannot directly communicate with each of the network devices 112, 114, and 116. Therefore, the network communication method 200 can be applied to the console 110 in the network environment 100 as shown in FIG. 1 to change the network communication protocol addresses of network devices 112, 114 and 116 to make the network devices 112, 114 and 116 have different network communication protocol addresses. Accordingly, the console 110 can directly communicate with each of the network devices 112, 114 and 116 without installing an additional DHCP server. Therefore, it is not necessary for the technicians to set up the network environment for installing the DHCP server. The workload of the technicians can be greatly reduced. The operations of the network communication method 200 mentioned in this embodiment, except for those whose order is specifically stated, can be adjusted in order according to actual needs, and can even be executed simultaneously or partially simultaneously. Furthermore, in different embodiments, these operations may be adaptively increased, replaced, and/or omitted. Please refer to FIG. 1 and FIG. 2A at the same time.

**In** step 210, a first request is sent by the console according to a first network communication protocol address. **In** some embodiments, the console 110 may broadcast the first request on the network according to the first network protocol address of the network devices 112, 114, and 116. When each of the network devices 112, 114, and 116 receives the first request, each of the network devices 112, 114, and 116 will generate a first reply message to reply to the console 110. The first reply message includes respective device information. In some implementations, the first request is a Simple Service Discovery Protocol (SSDP) device M-Search request. The first network communication protocol address is an Internet Protocol version 4 (IPv4) address, but the present disclosure is not limited thereto.

Next, in step 220, first reply messages including second network communication protocol addresses generated by the network devices in response to the first request are received by the console. **In** some embodiments, the console 110 may receive the first reply messages replied by the network devices 112, 114 and 116 in response to the first request. Each of the first reply messages replied by the network devices 112, 114, and 116 includes respective device information. The device information comprises respective second network communication protocol address of each of the network devices 112, 114, and 116. In some embodiments, the second network communication protocol address is an Internet Protocol version 6 (IPv6) address, but the present disclosure is not limited thereto. Although the network devices 112, 114, and 116 have the same IPv4 address, the network devices 112, 114, and 116 have different IPv6 addresses. Therefore, the console 110 sends a simple service discovery protocol device M-search request to each network device 112, 114 and 116. Then, the network device 112, 114 and 116 reply respective IPv6 addresses to the console 110.

In step 230, the second network protocol addresses are used to communicate with the network devices by the console. In some embodiments, after the console 110 receives the IPv6 addresses replied by the network devices 112, 114, and 116, because the IPv6 addresses of the network devices 112, 114 and 116 are different, the console 110 can use respective IPv6 addresses of network devices 112, 114 and 116 to communicate with each of the network devices 112, 114 and 116.

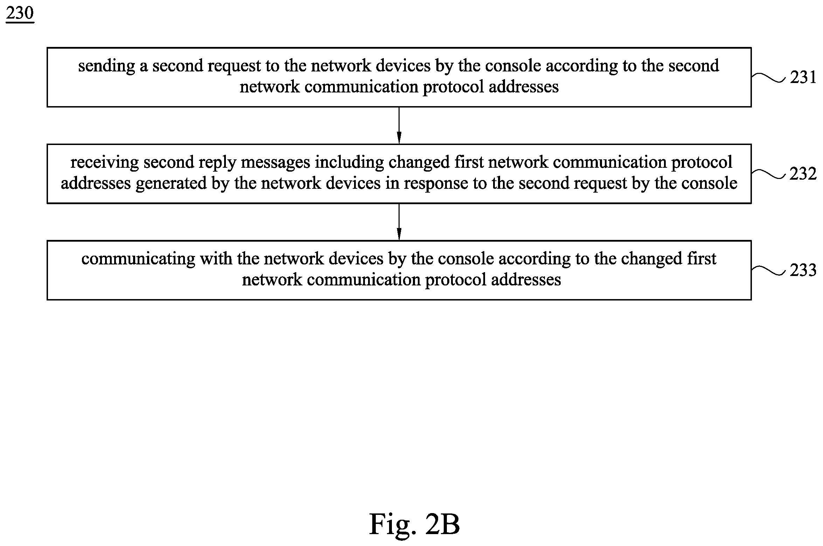

In some embodiments, the console 110 may use the respective IPv6 addresses of the network devices 112, 114, and 116 to communicate with each of the network device 112, 114, and 116 to issue a request to require the network devices 112, 114, and 116 to change their network communication addresses. In some embodiments, this request is to require the network devices 112, 114, and 116 to change their IPv4 addresses to make the network devices 112, 114, and 116 have different IPv4 addresses. Accordingly, step 230 may further include a process of changing the network address. FIG. 2B is a flow chart of a method for changing a network address according to an embodiment of the present disclosure. Please also refer to FIG. 1, FIG. 2A and FIG. 2B.

First, in step 231, a second request is sent to the network devices by the console according to the second network communication protocol addresses. In some embodiments, after the console 110 receives the IPv6 addresses replied by the network devices 112, 114, and 116, the console 110 may send a second request to the network devices 112, 114, and 116 according to the IPv6 addresses. In some embodiments, the network devices 112, 114, and 116 have same first network communication protocol address, such as an IPv4 address. Therefore, the second request is to require the network devices 112, 114, and 116 to change their first network communication protocol addresses to make the network devices 112, 114, and 116 have different network communication protocol addresses. Accordingly, when the network devices 112, 114 and 116 receive the second request, the network devices 112, 114 and 116 will change their first network communication protocol addresses in response to the second request. Then, each of the network devices 112, 114 and 116 may reply second reply messages to the console 110. Each of the reply messages includes the changed first network communication protocol address.

In step 232, second reply messages including respective changed first network communication protocol addresses generated by the network devices in response to the second request are received by the console. In some embodiments, the console 110 may receive second reply messages generated by each of the network devices 112, 114, and 116 in response to the second request. Each of the second reply messages includes respective changed first network communication protocol addresses of the network devices 112, 114 and 116. In some embodiments, the changed first network communication protocol address is an Internet Protocol version 4 (IPv4) address, but the present disclosure is not limited thereto. Furthermore, the changed first network communication protocol addresses of the network devices 112, 114 and 116 are different from each other.

Next, in step 233, the changed first network communication protocol addresses are used to communicate with the network devices by the console. In some embodiments, the network devices 112, 114, and 116 have different IPv4 addresses. Therefore, when the console 110 receives the changed first network communication protocol addresses replied by the network devices 112, 114, and 116, the console 110 can use respective IPv4 addresses to communicate with each of the network devices 112, 114 and 116. Accordingly, it is not necessary for technicians to install an additional DHCP server to assign dynamic addresses to make the network devices 112, 114 and 116 have different IPv4 addresses. Therefore, the workload of technicians can be greatly reduced.

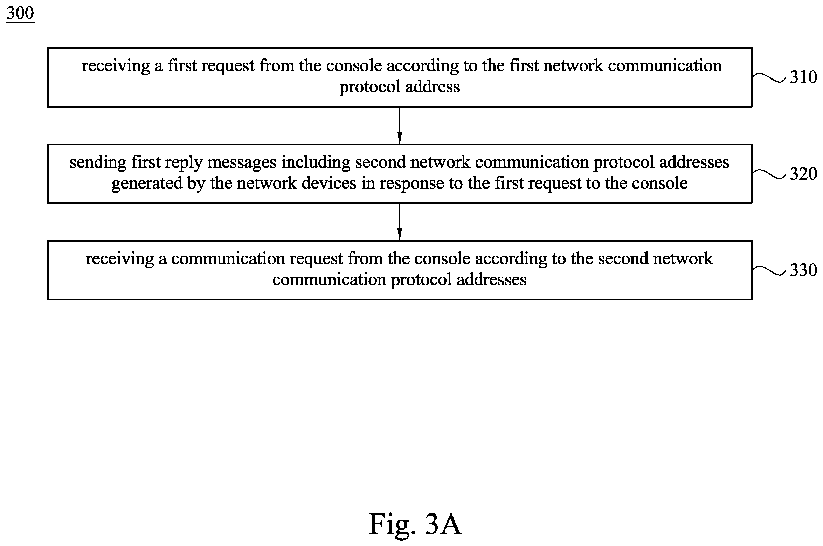

FIG. 3A is a flow chart of a network communication method according to another embodiment of the present disclosure. Because the network devices 112, 114, and 116 are the same network device, the network devices 112, 114, and 116 have the same first network communication protocol address, such as a IPv4 address. The console 110 cannot communicate with each of the network devices 112, 114, and 116. Therefore, the network communication method 300 can be applied to the network devices 112, 114, and 116 in the network environment 100 as shown in FIG. 1 to change first network communication protocol address to make the network devices 112, 114, and 116 have different first network communication protocol addresses. Accordingly, the console 110 can directly communicate with each of the network devices 112, 114 and 116 without installing an additional DHCP server. Therefore, the workload of technicians to set up the network environment for DHCP server can be greatly reduced. The operations of the network communication method 300 mentioned in this embodiment, except for those whose order is specifically stated, can be adjusted in order according to actual needs, and can even be executed simultaneously or partially simultaneously. Furthermore, in different embodiments, these operations may be adaptively increased, replaced, and/or omitted. Please refer to FIG. 1 and FIG. 3A at the same time.

**In** step 310, a first request sent by a console according to the first network communication protocol address is received by the network devices. **In** some embodiments, the network devices 112, 114 and 116 receive the first request broadcast by the console 110 over the network according to the first network communication protocol address of the network devices 112, 114 and 116. In some embodiments, the first request sent by the console 110 is a Simple Service Discovery Protocol (SSDP) device M-Search request. The first network communication protocol address is an Internet Protocol version 4 (IPv4) address, but the present disclosure is not limited thereto.

In step 320, first reply messages including second network communication protocol addresses generated by the network devices in response to the first request are sent to the console. In some embodiments, after the network devices 112, 114 and 116 receive the first request sent by the console 110, each of the network devices 112, 114 and 116 will generate a first reply message to reply to the console 110 with. Each of the first reply messages replied by the network devices 112, 114, and 116 includes respective device information. The device information comprises respective second network communication protocol address of each of the network devices 112, 114, and 116. In some embodiments, although the network devices 112, 114, and 116 have the same IPv4 address, the network devices 112, 114, and 116 have different IPv6 addresses. Therefore, the second network communication protocol address is an Internet Protocol version 6 (IPv6) address, but the present disclosure is not limited thereto.

In step 330, a communication request sent by the console according to the respective second network communication protocol address is received by each of the network devices. In some embodiments, after the console 110 receives the second network communication protocol addresses, IPv6 addresses, replied by the network devices 112, 114, and 116, because the IPv6 addresses of the network devices 112, 114 and 116 are different, the network devices 112, 114 and 116 can communicate with the console 110 according to respective IPv6 addresses.

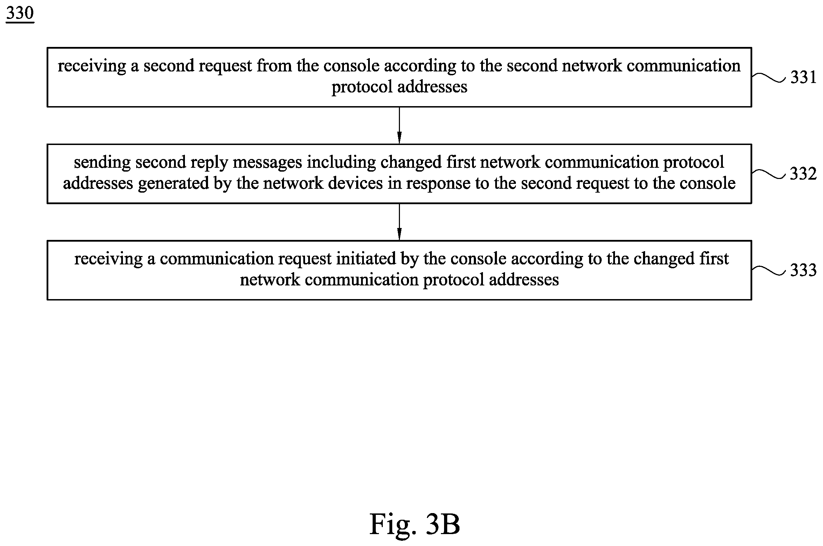

In some embodiments, the console 110 may use the respective IPv6 addresses of the network devices 112, 114, and 116 to communicate with each of the network device 112, 114, and 116 to issue a request to require the network devices 112, 114, and 116 to change respective IPv4 addresses to make the network devices 112, 114, and 116 have different IPv4 addresses. Accordingly, step 330 may further include a process of changing the network address. FIG. 3B illustrates a flow chart of a method for changing a network address according to another embodiment of the present disclosure. Please also refer to FIG. 1, FIG. 3A and FIG. 3B.

In step 331, a second request sent by the console according to the respective second network communication protocol addresses are received by the network devices. In some embodiments, the network devices 112, 114 and 116 receive the second request sent by the console 110 according to the respective IPv6 addresses of the network devices 112, 114 and 116. In some embodiments, the second request is to require the network devices 112, 114, and 116 to change respective first network communication protocol addresses, IPv4 addresses.

In step 332, second reply messages including respective changed first network communication protocol addresses generated by the network devices in response to the second request are sent to the console. In some embodiments, after the network devices 112, 114, and 116 receive the second request, the network devices 112, 114, and 116 will change respective first network communication protocol addresses in response to the second request and generate respective second reply messages to reply to the console 110. Each of the second reply messages includes respective changed first network communication protocol addresses of the network devices 112, 114 and 116. In some embodiments, the changed first network communication protocol address is an Internet Protocol version 4 (IPv4) address, but the present disclosure is not limited thereto. Furthermore, the changed first network communication protocol addresses of the network devices 112, 114 and 116 are different from each other.

In step 333, a communication request initiated by the console according to the respective changed first network communication protocol addresses is received by the network devices. In some embodiments, when the console 110 receives the respective changed first network communication protocol addresses, IPv4 addresses, replied by the network devices 112, 114, and 116, because the changed first Internet protocol addresses of the network devices 112, 114 and 116 are different, the network devices 112, 114 and 116 can communicate with console 110 according to respective changed first Internet protocol addresses. Accordingly, it is not necessary to install an additional DHCP server to configure different IPv4 addresses for the network devices 112, 114 and 116. Therefore, the workload of technicians to set up network environment can be greatly reduced.

Accordingly, this application utilizes the network devices have different Internet Protocol version 6 (IPV6) addresses to each other. A request is sent on the network by a console to require these network devices to return their IPV6 addresses. Then, the console may use the respective IPV6 addresses to communicate with these network devices to require change respective IPv4 addresses to make theses network devices have different IPv4 addresses. Because it is not necessary to use an additional DHCP server to pre-assign dynamic network addresses to the network devices in the present disclosure, it can significantly reduce the workload of technicians to set up the network environment.

## Claims

1. A network communication method (200) for communicating with a plurality of devices (112, 114, 116), wherein the plurality of devices (112, 114, 116) have a first network communication protocol address, wherein the network communication method(200) **characterized by** comprises:
sending a first request according to the first network communication protocol address (210);
receiving a plurality of first reply messages replied by the plurality of devices in response to the first request, wherein the first reply message of each of the plurality of devices includes a second network communication protocol address of the each of the plurality of devices (220); and
communicating with the each of the plurality of devices according to the second network communication protocol address of the each of the plurality of devices(230).

2. The network communication method as claimed in claim 1, wherein communicating with each of the plurality of devices (112, 114, 116) according to the second network communication protocol address of the each of the plurality of devices (230) **characterized by** further comprises:
sending a second request to each of the plurality of devices (112, 114, 116) according to the second network communication protocol address of the each of the plurality of devices(231);
receiving a plurality of second reply messages replied by the plurality of devices (112, 114, 116) in response to the second request, wherein the second reply message replied by the each of the plurality of devices (112, 114, 116) include a changed first network communication protocol address of the each of the plurality of devices (232), wherein the changed first network communication protocol addresses of the plurality of devices are different from each other; and
communicating with the each of the plurality of devices (112, 114, 116) according to the changed first network communication protocol address of the each of the plurality of devices (233).

3. The network communication method as claimed in claim 2, **characterized in that** the second request is a request to change the first network communication protocol address, and the each of the plurality of devices (112, 114, 116) changes the first network communication protocol address of the each of the plurality of devices (112, 114, 116) in response to the second request.

4. The network communication method as claimed in any one of claim 1 to claim 3, **characterized in that** the first network communication protocol address is an Internet Communication Protocol version 4 address.

5. The network communication method as claimed in any one of claim 1 to claim 4, **characterized in that** the second network communication protocol address is an Internet Communication Protocol version 6 address.

6. The network communication method as claimed in any one of claim 1 to claim 5, **characterized in that** the first request is a Simple Service Discovery Protocol (SSDP) device M-Search request.

7. A network communication method for a plurality of devices (112, 114, 116) to communicate with a console (110), wherein the plurality of devices (112, 114, 116) have a first network communication protocol address, and the network communication method (300) **characterized by** comprises:
receiving a first request sent by the console (110) according to the first network communication protocol address (310);
generating a plurality of first reply messages by the plurality of devices (112, 114, 116) in response to the first request to reply to the console (110), wherein the first reply message of each of the plurality of devices (112, 114, 116) includes a second network communication protocol address of the each of the plurality of devices (320); and
receiving a communication request initiated by the console (110) according to the second network communication protocol address of the each of the plurality of devices (330).

8. The network communication method as claimed in claim 7, wherein receiving the communication request initiated by the console (110) according to the second network communication protocol address of the each of the plurality of devices (330) **characterized by** further comprises:
receiving a second request sent by the console (110) according to the second network communication protocol address of the each of the plurality of devices (331);
generating a plurality of second reply messages by the plurality of devices (112, 114, 116) in response to the second request to reply to the console (110), wherein the second reply message of the each of the plurality of devices include a changed first network communication protocol address of the each of the plurality of devices (332), wherein the changed first network communication protocol addresses of the plurality of devices (112, 114, 116) are different from each other; and
receiving the communication request initiated by the console(110) according to the changed first network communication protocol address of the each of the plurality of devices (333).

9. The network communication method as claimed in claim 8, **characterized in that** the second request is a request to change the first network communication protocol address, and the each of the plurality of devices (112, 114, 116) changes the first network communication protocol address of the each of the plurality of devices in response to the second request.

10. The network communication method as claimed in any one of claim 7 to claim 9, **characterized in that** the first network communication protocol address is an Internet Communication Protocol version 4 address.

11. The network communication method as claimed in any one of claim 7 to claim 10, **characterized in that** the second network communication protocol address is an Internet Communication Protocol version 6 address.

12. The network communication method as claimed in any one of claim 7 to claim 11, **characterized in that** the first request is a Simple Service Discovery Protocol (SSDP) device M-Search request.

13. A network communication method for communication between a console (110) and a plurality of devices (112, 114, 116), wherein the plurality of devices (112, 114, 116) have a first network communication protocol address, and the network communication method **characterized by** comprises:
sending, by the console (110), a first request to the plurality of devices (112, 114, 116) according to the first network communication protocol address;
receiving, by the plurality of devices (112, 114, 116), the first request to generate a plurality of first reply messages in response to the first request to reply to the console (110), wherein the first reply message generated by each of the plurality of devices (112, 114, 116) includes a second network communication protocol address of the each of the plurality of devices (112, 114, 116);
receiving, by the console(110), each of the first reply messages replied by the plurality of devices (112, 114, 116);
sending, by the console(110), a second request to the each of the plurality of devices (112, 114, 116) according to the second network communication protocol address of the each of the plurality of devices (112, 114, 116);
receiving, by the plurality of devices (112, 114, 116), the second request to generate a plurality of second reply messages in response to the second request to reply to the console (110), wherein the second reply message of the each of the plurality of devices (112, 114, 116) include a changed first network communication protocol address of the each of the plurality of devices (112, 114, 116), wherein the changed first network communication protocol addresses of the plurality of devices (112, 114, 116) are different from each other; and
initiating a communication request, by the console(110), to communicate with the each of the plurality of devices (112, 114, 116) according to the changed first network communication protocol address of the each of the plurality of devices (112, 114, 116).

14. The network communication method as claimed in claim 13, **characterized in that** the second request is a request to change the first network communication protocol address, and the each of the plurality of devices (112, 114, 116) changes the first network communication protocol address of the each of the plurality of devices (112, 114, 116) in response to the second request.

15. The network communication method as claimed in claim 13 or claim 14, **characterized in that** the first network communication protocol address is an Internet Communication Protocol version 4 address and the second network communication protocol address is an Internet Communication Protocol version 6 address.

## Amended claims

### Amended claims in accordance with Rule 137(2) EPC.

1. A network communication method (200) for communicating with a plurality of devices (112, 114, 116), wherein the plurality of devices (112, 114, 116) have the same first network communication protocol address, wherein the network communication method (200) comprises:
sending a first request according to the first network communication protocol address (210);
receiving a plurality of first reply messages replied by the plurality of devices in response to the first request, wherein the first reply message of each of the plurality of devices includes a second network communication protocol address of the each of the plurality of devices (220); and
communicating with the each of the plurality of devices according to the second network communication protocol address of the each of the plurality of devices (230);
wherein the first network communication protocol address is an Internet Communication Protocol version 4 address; and
wherein the second network communication protocol address is an Internet Communication Protocol version 6 address.

2. The network communication method as claimed in claim 1, wherein communicating with each of the plurality of devices (112, 114, 116) according to the second network communication protocol address of the each of the plurality of devices (230) **characterized by** further comprises:
sending a second request to each of the plurality of devices (112, 114, 116) according to the second network communication protocol address of the each of the plurality of devices (231);
receiving a plurality of second reply messages replied by the plurality of devices (112, 114, 116) in response to the second request, wherein the second reply message replied by the each of the plurality of devices (112, 114, 116) include a changed first network communication protocol address of the each of the plurality of devices (232), wherein the changed first network communication protocol addresses of the plurality of devices are different from each other; and
communicating with the each of the plurality of devices (112, 114, 116) according to the changed first network communication protocol address of the each of the plurality of devices (233).

3. The network communication method as claimed in claim 2, **characterized in that** the second request is a request to change the first network communication protocol address, and the each of the plurality of devices (112, 114, 116) changes the first network communication protocol address of the each of the plurality of devices (112, 114, 116) in response to the second request.

4. The network communication method as claimed in any one of claim 1 to claim 3, **characterized in that** the first request is a Simple Service Discovery Protocol (SSDP) device M-Search request.

5. A network communication method for a plurality of devices (112, 114, 116) to communicate with a console (110), wherein the plurality of devices (112, 114, 116) have the same first network communication protocol address, and the network communication method (300) comprises:
receiving a first request sent by the console (110) according to the first network communication protocol address (310);
generating a plurality of first reply messages by the plurality of devices (112, 114, 116) in response to the first request to reply to the console (110), wherein the first reply message of each of the plurality of devices (112, 114, 116) includes a second network communication protocol address of the each of the plurality of devices (320); and
receiving a communication request initiated by the console (110) according to the second network communication protocol address of the each of the plurality of devices (330);
wherein the first network communication protocol address is an Internet Communication Protocol version 4 address; and
wherein the second network communication protocol address is an Internet Communication Protocol version 6 address.

6. The network communication method as claimed in claim 5, wherein receiving the communication request initiated by the console (110) according to the second network communication protocol address of the each of the plurality of devices (330) **characterized by** further comprises:
receiving a second request sent by the console (110) according to the second network communication protocol address of the each of the plurality of devices (331);
generating a plurality of second reply messages by the plurality of devices (112, 114, 116) in response to the second request to reply to the console (110), wherein the second reply message of the each of the plurality of devices include a changed first network communication protocol address of the each of the plurality of devices (332), wherein the changed first network communication protocol addresses of the plurality of devices (112, 114, 116) are different from each other; and
receiving the communication request initiated by the console (110) according to the changed first network communication protocol address of the each of the plurality of devices (333).

7. The network communication method as claimed in claim 6, **characterized in that** the second request is a request to change the first network communication protocol address, and the each of the plurality of devices (112, 114, 116) changes the first network communication protocol address of the each of the plurality of devices in response to the second request.

8. The network communication method as claimed in any one of claim 5 to claim 7, **characterized in that** the first request is a Simple Service Discovery Protocol (SSDP) device M-Search request.

9. A network communication method for communication between a console (110) and a plurality of devices (112, 114, 116), wherein the plurality of devices (112, 114, 116) have the same first network communication protocol address, and the network communication method comprises:
sending, by the console (110), a first request to the plurality of devices (112, 114, 116) according to the first network communication protocol address;
receiving, by the plurality of devices (112, 114, 116), the first request to generate a plurality of first reply messages in response to the first request to reply to the console (110), wherein the first reply message generated by each of the plurality of devices (112, 114, 116) includes a second network communication protocol address of the each of the plurality of devices (112, 114, 116);
receiving, by the console (110), each of the first reply messages replied by the plurality of devices (112, 114, 116);
sending, by the console(110), a second request to the each of the plurality of devices (112, 114, 116) according to the second network communication protocol address of the each of the plurality of devices (112, 114, 116);
receiving, by the plurality of devices (112, 114, 116), the second request to generate a plurality of second reply messages in response to the second request to reply to the console (110), wherein the second reply message of the each of the plurality of devices (112, 114, 116) include a changed first network communication protocol address of the each of the plurality of devices (112, 114, 116), wherein the changed first network communication protocol addresses of the plurality of devices (112, 114, 116) are different from each other; and
initiating a communication request, by the console (110), to communicate with the each of the plurality of devices (112, 114, 116) according to the changed first network communication protocol address of the each of the plurality of devices (112, 114, 116);
wherein the first network communication protocol address is an Internet Communication Protocol version 4 address and the second network communication protocol address is an Internet Communication Protocol version 6 address.

10. The network communication method as claimed in claim 9, **characterized in that** the second request is a request to change the first network communication protocol address, and the each of the plurality of devices (112, 114, 116) changes the first network communication protocol address of the each of the plurality of devices (112, 114, 116) in response to the second request.
